(19) Europäisches Patentamt
European Patent Office
Office européen des brevets

(11) **EP 2 266 411 A2**

(12) **EUROPÄISCHE PATENTANMELDUNG**

(43) Veröffentlichungstag:
**29.12.2010  Patentblatt 2010/52**

(51) Int Cl.:
*A22C 18/00* (2006.01)          *A22C 21/00* (2006.01)
*A23J 1/02* (2006.01)

(21) Anmeldenummer: **10006441.9**

(22) Anmeldetag: **22.06.2010**

(84) Benannte Vertragsstaaten:
**AL AT BE BG CH CY CZ DE DK EE ES FI FR GB GR HR HU IE IS IT LI LT LU LV MC MK MT NL NO PL PT RO SE SI SK SM TR**
Benannte Erstreckungsstaaten:
**BA ME RS**

(30) Priorität: **23.06.2009   DE 102009029924**

(71) Anmelder: **Keck, Petra**
**89350 Mindelaltheim (DE)**

(72) Erfinder: **Keck, Petra**
**89350 Mindelaltheim (DE)**

(74) Vertreter: **Höfer, Friederike**
**Dreiköniggasse 10**
**89073 Ulm (DE)**

(54) **Verfahren zum Frischhalten, Lagern und gegebenenfalls Aufarbeiten von Schlachtnebenprodukten sowie eine Vorrichtung zur Durchführung des Verfahrens**

(57)     Die Erfindung betrifft ein Verfahren zum Frischhalten, Lagern und gegebenenfalls Aufarbeiten von Schlachtnebenprodukten, insbesondere in großindustriellem Maßstab, umfassend die Schritte:
(1) Sammeln der Schlachtnebenprodukte, bevorzugt von Kleintieren einer Tiergattung, wobei die Tiergattung ausgewählt ist aus Geflügel oder Hasenartigen, unmittelbar nach dem Schlachten in einem oder mehreren Behältern (10, 10a, 10b);
(2) Kühlen der Schlachtnebenprodukte;

(3) Durchmischen der Schlachtnebenprodukte;
(4) Entnehmen der Schlachtnebenprodukte und gegebenenfalls
(5) Aufarbeiten der Schlachtnebenprodukte unter Gewinnen von wertvollen Inhaltsstoffen in Form von Fetten und Proteinen.

    Gegenstand der Erfindung ist auch eine Vorrichtung zur Durchführung des Verfahrens. Mit der vorliegenden Erfindung gelingt es wertvolle Inhaltsstoffe in Form von Fetten und Proteinen aus Schlachtabfällen zu stabilisieren und zurück zu gewinnen.

## Figur 16

**Beschreibung**

Die vorliegende Erfindung bezieht sich auf ein Verfahren zum Frischhalten, Lagern und gegebenenfalls Aufarbeiten von Schlachtnebenprodukten sowie eine Vorrichtung zur Durchführung des Verfahrens.

**Hintergrund der Erfindung**

Ein Hauptnahrungsmittel des Menschen ist Fleisch. In der Bundesrepublik Deutschland liegt der durchschnittliche Verzehr von Fleisch-/erzeugnissen und Wurstwaren bei Männern bei ca. 100 g pro Tag und bei Frauen bei ca. 50 g pro Tag. Zur Fleischproduktion wird die Tierhaltung in der Landwirtschaft eingesetzt, wobei in Deutschland vor allem Hausrind, Hausschwein und Geflügel gehalten werden. Diese Nutztiere müssen geschlachtet werden. Unter einer "Schlachtung" versteht man das Töten der Nutztiere, um deren Fleisch für den menschlichen Verzehr zu gewinnen sowie die Nebenprodukte, wie beispielsweise Knochen, Horn und Haut, einer weiteren Verarbeitung zuzuführen. Die Schlachtung darf in den meisten westlichen Staaten ausschließlich durch ausgebildete Fleischer (auch bezeichnet als Schlachter, Metzger oder Fleischhauer) durchgeführt werden.

Das Schlachten wird neben Hausschlachtungen regelmäßig in großindustriellem Maßstab in Schlachthöfen oder großen Metzgereien in sogenannten Schlachstraßen durchgeführt. Den Tierschutz am Schlachthof regelt in Deutschland die Tierschutz-Schlachtverordnung (TierSchlV). Die Tiere werden betäubt, aufgehängt, entblutet, die Haut abgezogen, entweidet und die Körper in die entsprechenden Teilstücke zerlegt. Aus Hygienegründen wird bei den einzelnen Schritten in der Regel Trinkwasser zum Spülen oder Wasserdampf verwendet. Großmetzgereien liefern meist Schweinehälften oder Rinderviertel.

Zum Schlachten von Tieren, sowie dem Transport und der Wiederverwertung von Fleischprodukten sind zahlreiche Druckschriften aus dem Stand der Technik bekannt geworden:

So beschreibt die WO 94/14326 A1 eine fahrbare Vieh-Schlachteinrichtung und bezieht sich auf das Schlachten von Rindern und Schweinen. Die WO 94/14326 hat das primäre Ziel Fleisch als Lebensmittel durch Schlachtung zu gewinnen, insbesondere als mobile Wirtschaftseinheit, um den Tieren den Transportstress zu ersparen und damit eine höhere Fleischqualität zu generieren. Die Verarbeitung von Fleisch, das zum menschlichen Verzehr bestimmt ist, in einem fahrenden Schlachthof, wie in dieser Druckschrift beschrieben, verstößt wahrscheinlich gegen die Fleisch-Hygienegesetzte, die im Rahmen der Lebensmittelaufarbeitung in jedem Fall beachtet werden müssen. Erfindungsgemäß wird demgegenüber nicht geschlachtet, sondern das erfindungsgemäße Verfahren schließt sich erst unmittelbar nach dem Schlachtprozess an.

Weiterhin beschreibt die DE 34 41 425 C1 eine Schrägförderschnecke zum Transport, Mischen und zum Kühlen von leichtverderblichem Gut zum Eintrag in Abpackstationen. Schlachtabfälle sind hier nicht genannt. Die beschriebene Förderschnecke hat die Eigenschaft schräg zu fördern und kann damit nur stückige bzw. hochviskose Produkte mischen, fördern oder kühlen. Die geförderten Produkte werden zudem bereits vorgekühlt dem Aufgabetrichter der Schnecke zugeführt. Damit handelt es sich offensichtlich um einen Teil einer Strasse, die ohne weitere Subeinrichtung ungebräuchlich ist. Ferner wird in der DE 34 41 425 C1 durch Stickstoffzufuhr die gewünschte Kälteleistung bereitgestellt. Diese Technologie findet daher bei Raumtemperatur in Fabrik bzw. Fabrikationshallen Einsatz.

Mit der Schrägförderschnecke gemäß der DE 34 41 425 C1 kann man keine leichtviskosen Produkte bearbeiten, es ist nicht möglich kleine Schlachabfälle mit beispielsweise fliesender, schwimmender, matschiger Konsistenz zu fördern. Weiterhin nachteilig ist, dass sich der Transport mittels der Schrägförderschnecke nicht unmittelbar an die Schlachtung anschließt, so dass eine zusätzlich Vorkühlung erfolgen muss. Ferner stellt die Förderschnecke keine eigenständige, vollständige Wirtschaftseinheit dar und bedarf weiterer Vorrichtungen bzw. Verfahrensschritte zur Funktion. Weiterhin nachteilig bei der DE 34 41 425 C1 ist, dass zur Kühlung verwendeter Stickstoff, ob flüssig oder gasförmig eingesetzt, zu Verbrennungen an den Materialien führt (Frostbrand) und damit die Materialien bereits irreversibel geschädigt werden. Ein Volumenstromkühleffekt fehlt hier gänzlich.

Weiterhin beschreibt die US 4 476 686 A eine Vorrichtung sowie ein Verfahren zum Kühlen und Mischen von zerkleinertem Fleisch, wobei während dem Mischen $CO_2$ zugegeben wird. Es handelt sich um eine Mischvorrichtung, wobei jedoch keine Möglichkeit der gleichzeitigen Bevorratung vorgesehen ist. Das Aufgabegut ist Hackfleisch, also bereits vorbehandeltes Produkt, das nicht unmittelbar von der Schlachtung stammt. Ferner ist das Aufgabegut bereits gekühlt, so dass zusätzliche Verfahrensschritte dem eigentlichen Verfahren vorgeschaltet werden müssen. Als Kälteträger wird hier Kohlendioxid eingesetzt, was zu einer Schockreaktion am Produkt führen kann, und Frostbrand hervorruft, und den gewünschten Effekt einer Volumenstromkühlung vermissen lässt.

Ferner bezieht sich die DE 94 07 971 U1 auf eine Vorrichtung zur Verarbeitung von Schlachtabfällen, insbesondere Därmen. Hierbei erfolgt das Fördern der Abfälle mit Hilfe einer Schnecke, wobei zusätzlich Mittel zum Zerschneiden und Aufschlitzen der Schlachtabfälle vorgesehen sind. Die Druckschrift betrifft daher im Wesentlichen das Trennen von Darm und Inhalt. Es handelt sich um das Aufschneiden, Entleeren, Auspressen und Fördern von Därmen sowie dem anschließenden Entsorgen. Dies stell einen Ansatz dar, bei dem ein bekanntes Verfahren noch effizienter gestaltet wird. Dieses Verfahren ist mittlerweile überholt, da Darminhalte aus Hygienegründen während der Schlachtung durch Unterdruckzyklonen abgesaugt werden.

Schließlich beschäftigt sich die AT 28 066 E mit einer Einrichtung zum Kompostieren von tierischen und/oder pflanzlichen Bestandteilen. Die Kompostieranlagen sind derart ausgelegt, dass der Abbau und die Zerstörung der Inhaltsstoffe beschleunigt wird.

Bei jedem Schlachtvorgang von Säugetieren bleiben Reste in Form von Schlachtabfällen übrig, die keiner der oben geschilderten Wiederaufarbeitungen mehr zugänglich sind und nur noch entsorgt werden können. Dies sind nicht mehr zum menschlichen Verzehr bestimmte tierische Produkte, die bislang keiner weiteren Aufarbeitung mehr unterzogen werden konnten. Dem Schlachtprozess sind demnach zwingend Abfallbeseitigungsmaßnahmen angeschlossen, die nicht nur sehr zeit- und kostenaufwändig, sondern zudem aufgrund gesetzlicher Regelungen stark reglementiert sind. Die regelmäßige Verfahrensweise hinsichtlich der kostenpflichtigen Entsorgung und weiteren Verwertung von Schlachtabfällen in den Schlachthöfen ist zunächst das tägliche Verbringen der Abfälle durch autorisierte Entsorgungsunternehmen in konventionelle Absetzcontainer zu entsprechend zugelassenen Zwischenbehandlungsbetrieben. Derartige Zwischenbehandlungsbetriebe sind regelmäßig in allen Bundesländern vorhanden und waren vor 1996 die sogenannten TBAs "Tierkörperbeseitigungsanlagen" (Körperschaften des öffentlichen Rechts).

Die wertschöpfende Behandlung in diesen Zwischenbehandlungsbetrieben ist das entsprechende Erhitzen der Abfälle unter Druck und das daran angeschlossene Separieren von Fetten. Ausweislich Fette sind wertvolle Rohstoffe, die wieder verwendet und daher verkauft werden können. Die restlichen 70% entfetteten Produkts werden von den Entsorgungsunternehmen dann an Unternehmen kostenpflichtig abgegeben, wie zum Beispiel Zementfabriken, wo dieses als zusätzlicher Brennstoff zum Einsatz kommt.

Weiterhin gibt es hoch spezialisierte Betriebe, die unter Verwendung speziell entwickelter Verfahren mit relativ hohem Kostenaufwand aus den Abfällen zum Beispiel Mehle und Konzentrate herstellen. Diese Betriebe lohnen sich nur in Regionen mit hohen Schlachtzahlen und daher überproportionalem Abfallaufkommen, so dass sich die immensen Investitionskosten über den gesicherten nahen Abfallzugriff rechnen lassen.

Der vorliegenden Erfindung liegt demnach die Aufgabe zugrunde, ein Verfahren bzw. eine Vorrichtung zur Verfügung zu stellen, mit dem/der es in einfacher Weise gelingt, Schlachtabfälle bzw. -nebenprodukte, die bislang nicht wieder aufgearbeitet werden konnten und als Abfall kostspielig entsorgt werden mussten, derart zu behandeln, dass eine Lagerung möglich wird und wertvolle Inhaltsstoffe möglichst ohne Verluste aus diesen wiedergewonnen werden können.

**Beschreibung der Erfindung**

Erfindungsgemäß wird die geschilderte Aufgabe gelöst durch ein Verfahren zum Frischhalten und Lagern von Schlachtnebenprodukten, umfassend die Schritte:

(1) Sammeln der Schlachtnebenprodukte, bevorzugt von Kleintieren einer einzigen Tiergattung, wobei die Tiergattung ausgewählt ist aus Geflügel oder Hasenartigen, unmittelbar nach dem Schlachten in einem oder mehreren Behältern;
(2) Kühlen der Schlachtnebenprodukte;
(3) Durchmischen der Schlachtnebenprodukte und
(4) Entnehmen der haltbar gemachten Schlachtnebenprodukte
in Schritt (1) bis (4) jeweils unter Beibehaltung der Qualität der vorhandenen Inhaltsstoffe in Form von Fetten und Proteinen, die unmittelbar nach dem Schlachten vorliegt.

Erfindungsgemäß bereitgestellt wird auch ein Verfahren zum Frischhalten, Lagern und Aufarbeiten von Schlachtnebenprodukten, umfassend die Schritte:

(1) Sammeln der Schlachtnebenprodukte, bevorzugt von Kleintieren einer einzigen Tiergattung, wobei die Tiergattung ausgewählt ist aus Geflügel oder Hasenartigen, unmittelbar nach dem Schlachten in einem oder mehreren Behältern;
(2) Kühlen der Schlachtnebenprodukte;
(3) Durchmischen der Schlachtnebenprodukte;
(4) Entnehmen der haltbar gemachten Schlachtnebenprodukte unter Entleeren des oder der Behälter
in Schritt (1) bis (4) jeweils unter Beibehaltung der Qualität der vorhandenen Inhaltsstoffe in Form von Fetten und Proteinen, die unmittelbar nach dem Schlachten vorliegt, und
(5) Aufarbeiten der Schlachtnebenprodukte unter Gewinnen von wertvollen Inhaltsstoffen in Form von Fetten und Proteinen.

Das erfindungsgemäße Verfahren erfolgt im Rahmen der Fleisch-Hygienegesetze (im Sinne der Verordnung EG 1774/2002, insbesondere in Übereinstimmung mit den Kategorien II und III).

Die vorliegende Erfindung bezieht sich anstatt auf "Schlachtabfall" nunmehr auf "Schlachtnebenprodukte", da die Reste nicht mehr Abfall sind, d.h. nicht mehr weggeworfen und entsorgt werden müssen, sondern vielmehr eine Rückgewinnung von wertvollen Inhaltsstoffen, die wieder verwertet werden können, durchgeführt werden kann.

Im Rahmen der vorliegenden Erfindung soll unter dem Begriff "Schlachtnebenprodukt" dasselbe verstanden werden, was der Fachmann im Stand der Technik gemäß der gebräuchlichen Terminologie unter "Schlachtabfall" versteht, insbesondere die Produkte, die nach dem Schlachten als Reste übrig bleiben und bislang keiner Aufarbeitung mehr zugeführt werden konnten, da diese nicht mehr für den menschlichen Verzehr geeignet waren, sondern vielmehr entsorgt werden mußten, wie Schlachtkörperteile und Teile hiervon aller Gattungen von Säugetieren, die geschlachtet werden. Bevorzugt handelt es sich erfindungsgemäß um Produkte, die beim Schlachten von Kleintieren übrig bleiben und aufgrund ihrer besonders kleinen Größe keiner Wiederaufarbeitung mehr zugeführt werden können, und daher regelmäßig als Abfall entsorgt werden mußten. Der anatomische Zustand bei Anfall dieses Materials direkt nach der Schlachtung ist von so kleiner Beschaffenheit, das ein ökonomisch sinnvolles Konditionieren, wie Aufsammeln, Aufhängen, Auflegen usw., zur Kühlung nicht möglich ist. Anders als bei Teilen von Schweinen oder Rindern, die relativ groß und einfach handhabbar sind, werden Teile von Kleintieren bislang keiner Weiterverarbeitung unterzogen. Dies sind beispielsweise Hähnchenköpfe (ca. 40g), Hähnchenfüße (ca. 30 g) oder Darmpakete (ca. 250 g). Außerdem handelt es sich bei diesen kleinen Teilen, die bei einer Schlachtung im großem Maße anfallen, hinsichtlich der Konsistenz um eine fliesende Masse, die schwierig zu handhaben ist und daher bislang nur entsorgt werden konnte. Das erfindungsgemäße Verfahren stellt somit erstmals eine Möglichkeit zur Verfügung, auch derartige Schlachtabfälle von Kleintier-Schlachtungen einer wirtschaftlichen Aufarbeitung zuzuführen.

Die Tiere, um die es geht, sind erfindungsgemäß nicht weiter beschränkt und können per se jede Tierart, die geschlachtet wird, umfassen. Beispielhaft seien genannt: Rinder, Schweine, Schafe, Ziegen, Pferde, Kaninchen, Geflügel, Wild und dergleichen. Bevorzugt sind erfindungsgemäß Schlachtnebenprodukte von Kleintieren, die besonders bevorzugt nur aus einer einzigen Tiergattung ausgewählt sind, d.h. es werden nur Schlachnebenprodukte von einer Tiergattung gemäß dem erfindungsgemäßen Verfahren behandelt. Die bevorzugt verwendeten Tiergattungen sind erfindungsgemäß bevorzugt entweder Geflügel oder Hasenartige bzw. Hasentiere, zu denen Hasen als auch Kaninchen zählen. Zu der Tiergattung "Geflügel" gehören Haushühner, Truthahn, Enten, Gänse, Tauben und auch Straußvögel sowie Wildgeflügel, wie Fasan, Rebhuhn, Perlhuhn und Wachtel.

Die Schlachtnebenprodukte umfassen erfindungsgemäß die anfallenden Innereien, Köpfe, Füße, Federn, Knochen und Darmpakete, einschließlich Blut, insbesondere bevorzugt ausschließlich die Köpfe, Füße, Federn, Knochen und Darmpakete, einschließlich Blut. Unter "Darmpaketen" werden diejenigen Reste nach dem Schlachten verstanden, die sämtliche Darmteile und Inhaltsstoffe umfassen. Diese Schlachtnebenprodukte enthalten wertvolle Inhaltsstoffe, die jedoch bislang nicht zurückgewonnen wurden. Insbesondere handelt es sich um Schlachtabfälle von Kleintier-Schlachtungen einer einzigen ausgewählten Tiergattung, die - wie bereits erläutert - bislang keiner Wiederaufarbeitung unterzogen wurden. Im erfindungsgemäßen Verfahren werden bevorzugt nur Schlachtnebenprodukte einer einzigen Tiergattung verwendet, wie beispielsweise Schlachtnebenprodukte von Geflügel; die Verwendung von Schlachtnebenprodukten, resultierend von mehreren Tiergattungen, ist nicht zweckmäßig.

Gemäß der vorliegenden Erfindung wird demnach ein Verfahren bereitgestellt, mit dem unmittelbar nach dem Schlachten die resultierenden Schlachtnebenprodukte, beispielsweise aus Kleintier-Schlachtung, in einer Weise gesammelt und bevorratet bzw. gelagert werden können, so dass die wertvollen Inhaltsstoffe nicht zerstört werden. Insbesondere gelingt es durch die sofortige Kühlung, bevorzugt Schnellkühlung, und das Mischen in kontrollierter Weise die wertvollen Eiweißketten und Fettsäuren in den Schlachnebenprodukten zu stabilisieren. Die Lagerung und das Frischhalten der Schlachtnebenprodukte wird so über eine längere Zeitdauer, beispielsweise einige Stunden bis zu einige Tagen möglich, woran sich die Aufarbeitung unter Gewinnung von Eiweißen und Fetten anschließen kann.

Im Gegensatz zum Stand der Technik werden die Schlachtnebenprodukte unmittelbar nach dem Schlachten dem erfindungsgemäßen Verfahren zugeführt, d.h. der Schlachtabfall wird sofort gesammelt, gekühlt und gemischt. Etwaige vorverarbeitete oder bearbeitete Schlachtabfälle, die nicht unmittelbar von der Schlachtung stammen, sind für das erfindungsgemäße Verfahren unbrauchbar, da in diesen Fällen regelmäßig die wertvollen Inhaltsstoffe aufgrund nicht sachgemäßer Aufbewahrung zumindest teilweise zerstört sind.

Wesentlich für das erfindungsgemäß Verfahren ist daher, dass die Qualität der vorhandenen Inhaltsstoffe in Form von Fetten und Proteinen beibehalten wird. Es hat sich gezeigt, dass es von erheblicher Bedeutung ist, in welchem Zustand das erhaltene Produktmaterial verarbeitet wird. Mit anderen Worten, wird das Material in Form der Schlachtnebenprodukte unmittelbar dem erfindungsgemäßen Verfahren zugeführt, sind die enthaltenen Proteine und Fette biologisch intakt, und das Weiterverarbeitungsprodukt, beispielsweise Mehl für die Futtermittelindustrie, ist von wesentlich besserer Qualität. Wird das Material aber bereits vor Zuführung zum erfindungsgemäßen Verfahren geschädigt oder durch unsachgemäße Behandlung/Lagerung zerstört, ist diese Qualitätsminderung irreversibel und die schlechte Qualität des Materials kann nicht mehr verbessert werden.

Das Sammeln der Schlachtnebenprodukte gemäß Verfahrensschritt (1) ist erfindungsgemäß nicht besonders beschränkt. Dies kann in jeder dem Fachmann bekannten Art und Weise erfolgen, zum Beispiel über eine Zuleitung, insbesondere in Form eines Rohrs, eines Laufbands, einer Rutsche oder kann auch in anderer Weise durchgeführt werden. Vorzugsweise schließt sich das Sammeln der Schlachtnebenprodukte unmittelbar an das Schlachten an, damit die Inhaltsstoffe nicht zwischenzeitlich verderben.

Die vorzugsweise zum kontinuierlichen Sammeln vorhandene Zuleitung ist bevorzugt an die Auslassvorrichtung das Schlachtbetriebs hinsichtlich Form, Dimensionierung, Steigung und dergleichen angepasst, so dass das zu behandelnde Gut direkt dem erfindungsgemäßen Verfahren unterzogen werden kann.

Besonders bevorzugt ist die Zuleitung aus einem Material gefertigt oder derart beschichtet, dass aufgrund der glatten Oberfläche ein leichtes Abrutschen oder Befördern des Gutes möglich ist.

Bereits vor dem Sammeln der Schlachtnebenprodukte ist es von Vorteil, wenn das gegebenenfalls beim Schlachten verwendete Wasser, insbesondere das Prozess- oder Schlachtwasser sowie das Eigenwasser von den Schlachtnebenprodukten, entfernt wird. Dies kann durch jedes geeignete Verfahren erfolgen, beispielsweise unter Verwendung von Separatoren, wie Filter, Zentrifugen, gegebenenfalls mit Hilfe von Saugpumpen, oder in anderer Weise.

Das Sammeln der Schlachtnebenprodukte, vorteilhafterweise erst nach Entfernung des Prozess- und Eigenwassers, erfolgt in einem oder mehreren Behältern, deren Größe und Abmessungen für den Einzelfall angepasst sein können. Dies hängt von der aufzunehmenden Menge und Art der Schlachtnebenprodukte ab. Die Dimensionen der einzelnen Behälter können gemäß jedem Einzelfall ausgewählt werden. Beispielsweise können Behälter mit einem Volumen-Fassungsvermögen von etwa 10 bis etwa 100 m$^3$, bevorzugt etwa 30 bis etwa 60 m$^3$ zum Einsatz kommen. Die Behälter können eine beliebige Form haben, beispielsweise in Form von Wannen, Wannensegmenten, bevorzugt Halbwannensegmenten, Boxen, Trommeln oder Fässern, vorliegen und sind vorzugsweise zur Oberseite, wo die Schlachtnebenprodukte zugeführt werden, offen.

Die Sammelbehälter und/oder deren Umgebung werden gemäß Verfahrensschritt (2) gekühlt, damit ein Verderben der Inhaltsstoffe der gesammelten Schlachtnebenprodukte verhindert wird. Bevorzugt findet dass erfindungsgemäße Verfahren in einem Kühlraum statt. Damit werden neben dem Produkt alle Vorrichtungs-und Maschinenteile mitgekühlt. Hierdurch wird vermieden, dass beispielsweise die enthaltenen Fette vorzeitig ranzig werden und die Eiweißbausteine abgebaut und damit zerstört werden.

Vorzugsweise sind die Sammelbehälter aus einem Material hergestellt oder mit einem Material beschichtet, in dem die Schlachnebenprodukte nicht anhaften. Ein besonders bevorzugtes Material ist VA-Stahl.

Die Kühlung gemäß Verfahrensschritt (2) ist erfindungsgemäß nicht weiter beschränkt, es kann jede Form von Kühlung eingesetzt werden, sofern die Inhaltsstoffe, wie Fette und Proteine, nicht nachteilig beeinträchtigt, d.h. zerstört werden. Eine Kühlung, bei der ein Teil oder sämtliche wertvollen Inhaltsstoffe abgebaut oder zerstört werden, wie beispielsweise eine zu starke Kühlung, die Gefrierbrand auslöst, ist in jedem Falle zu vermeiden. Die Kühlung kann direkt oder indirekt durchgeführt werden. Eine indirekte Kühlung findet z.B. durch Kühlung des Behälters, der mit den Schlachtnebenprodukten in Kontakt steht, statt. Eine direkte Kühlung ist z.B. eine Kühlung der Schlachnebenprodukte durch Abkühlung der Umgebungsluft, bevorzugt durch Kühlung der Schlachtnebenprodukte von oben. Besonders bevorzugt ist eine direkte Kühlung, insbesondere eine Gebläsekühlung. Die Kühlung kann auch mit Hilfe eines Kühlers, beispielsweise eines Durchlaufkühlers, durchgeführt werden. Die Kühlung erfolgt auf eine Temperatur im Bereich bevorzugt auf unter 10°C, bevorzugter unter 8°C, ganz besonders bevorzugt auf um etwa 0°C (jeweils ± 2°C). Besonders bevorzugt wird so schnell wie möglich abgekühlt, so dass vorzugsweise eine Schnellkühlung erfolgt.

Besonders bevorzugt ist eine mechanische Kühlung, zum Beispiel mittels eines oder meherer Kompressoren.

Die Kühlung, insbesondere schnelle Kühlung, ist erfindungsgemäß von wesentlicher Bedeutung, da das Schlachten üblicherweise bei Raumtemperatur stattfindet und die Körpertemperatur der Schlachttiere im Bereich um etwa 37°C liegt und so die Abfälle in der Regel auch bei 37°C anfallen. Aufgrund der vom Schlachtbetrieb üblicherweise nicht weiter geplanten Verwendung der anfallenden Schlachtnebenprodukte werden diese auch keiner weiteren Behandlung unterzogen. Der Schlachtabfall fällt so andauernd und ständig z.B. über Auslaufrohre in die bereits erwähnten Container und verbleibt dort über den ganzen Tag luftdicht übereinander geschichtet. Spätestens nach 60 Minuten tritt daher ein Verderben sowie Fäulnis der enthaltenen Proteine und Fettsäuren ein. Proteine denaturieren unter Einfluss höherer Temperaturen, was irreversibel abläuft, so dass die Proteine nicht nur zerstört werden, sondern sich auch toxisch verändern. Bekannt ist beispielsweise das Clostridium botulinum, ein Bakterium das sich unter Sauerstoffausschluss und mangelnder Kühlung in Lebensmitteln vermehrt und Toxine bildet, wie Botulinumtoxin, das eine Lebensmittelintoxikation auslösen kann.

Bei Fetten werden unter Einfluss von Licht, höherer Temperaturen, Luftsauerstoff, Wasser, Mikroben die Doppelbindungen oder die Esterbindung angegriffen, wobei diese ranzig und daher giftig werden. Für verdorbene Proteine und Fettsäuren ist eine Aufarbeitung ökonomisch nicht mehr sinnvoll. Daher ist es nach dem erfindungsgemäßen Verfahren von wesentlicher Bedeutung, Maßnahmen zu ergreifen, um die Zerstörung dieser wertvollen Inhaltsstoffe zu vermeiden.

Ein weiterer wesentlicher Aspekt des erfindungsgemäßen Verfahrens ist das Mischen der gekühlten Schlachtnebenprodukte (Verfahrensschritt (3)). Dies erfolgt bevorzugt kontinuierlich, kann aber auch diskontinuierlich durchgeführt werden. Das Mischen kann in beliebiger Weise erfolgen, wobei die Nebenprodukte insgesamt möglichst gut durchmischt werden sollten und Luft an diese gelangen sollte, damit die Inhaltsstoffe gleichmäßig gekühlt und somit nicht zerstört werden.

Das Mischen dient zur Verbesserung der Kühlwirkung und zur Schaffung einer ständig neuen Oberfläche, damit das gesamte Gut möglichst gleichmäßig kühl gehalten und möglichst viel Wärme abgeführt werden kann.

Das Mischen wird erfindungsgemäß besonders bevorzugt mit einer Mischvorrichtung durchgeführt. Es ist jede dem Fachmann bekannte Mischvorrichtung einsetzbar, welche geeignet ist, große Mengen, wie diese beim Schlachten in Großbetrieben anfallen, zu durchmischen.

Erfindungsgemäß besonders bevorzugt werden Schlachnebenprodukte von Kleintieren, bevorzugt von nur einer Tiergattung (Tierart), verwendet. Hierbei handelt es sich bevorzugt um Köpfe, Füße und Darmpakete von Geflügel oder um Köpfe, Füße und Darmpakete von Hasenartigen. Bei Verwendung dieser besonders kleinen Teilen kann das Mischen erfindungsgemäß in besonders einfacher Weise durchgeführt werden, da sich die kleinen Teile leichter Durchmischen lassen als Schlachtnebenprodukte von großen Tieren, wie beispielsweise Schweinen und Rindern.

Erfindungsgemäß kann entweder der Behälter drehbar und die Mischvorrichtung im Behälter befestigt sein oder der Behälter ist feststehend und die Mischvorrichtung ist drehbar ausgebildet.

Nach einer bevorzugten Variante der Erfindung ist der Behälter drehbar ausgestaltet und die Mischvorrichtung feststehend bzw. fest montiert (nicht an sich beweglich, aber zusammen mit dem Behälter drehbar). Beispielsweise wird eine Trommel eingesetzt, in der Bleche, sog. Leitbleche, als Mischvorrichtung montiert sind, die als Mitnehmer für die eingefüllten Schlachtnebenprodukte dienen, um diese während der Drehung der Trommel um ihre Längsachse zu vermischen.

Nach einer weiteren bevorzugten erfindungsgemäßen Ausführungsform ist der Behälter selbst nicht drehbar, sondern feststehend, und die Mischvorrichtung drehbar ausgestaltet. Als Mischvorrichtung wird bevorzugt mindestens eine Welle eingesetzt, welche sich über oder durch den gesamten Behälter erstreckt, in dem die Schlachtnebenprodukte gesammelt werden. An dieser mindestens einen Welle sind Mittel zum Durchmischen vorhanden, die entsprechend dimensioniert sind, um möglichst die gesamte Menge an Produkt zu durchmischen. Beispielhaft Durchmischungsmittel sind Schaufeln, Paddel, Blätter, Segmente, Bleche, wie Leitbleche, definierter Form und Größe. Die Mittel zur Durchmischung sind vorzugsweise alle gleich groß und voneinander beabstandet und können gegebenenfalls auch voneinander versetzt an der mindestens einen Welle angeordnet sein. Diese können gleichzeit als Mitnehmer fungieren und so das zu durchmischende Gut gleichmäßig in den Behältern verteilen.

Vozugsweise werden erfindungsgemäß zwei Wellen verwendet, die zueinander gegenläufig betrieben werden. Zweckmäßigerweise sind die Wellen derart voneinander beabstandet und derart ausgestaltet, dass sich die jeweiligen Mittel zum Durchmischen an den beiden Wellen nicht gegenseitig behindern und blockieren.

Die Welle kann mittels handelsüblicher Motoren angetrieben und durch entsprechende Steuermittel betrieben werden.

Beim Durchmischen ist es zweckmäßig, wenn den gesammelten Schlachtnebenprodukten über die gesamte Menge ausreichend gekühlte Luft zugeführt wird, um diese gleichmäßig zu kühlen. Dieser Effekt wird durch die vorgesehenen Durchmischungsmittel verstärkt.

Das Mischen kann kontinuierlich oder in Intervallen erfolgen. Für den Fachmann ist es ohne weiteres möglich, das Mischen derart einzustellen und zu kontrollieren, dass die Schlachtnebenprodukte nicht verderben. Als Faustregel kann eine Drehung der Welle mit Durchmischungsmitteln mit 1 bis 50 Umdrehungen/Minute angegeben werden. Es sind aber auch andere Durchmischungsgrade möglich.

Das Mischen kann auch zum besseren Verteilen des vorzugsweise kontinuierlich befüllten Behälters eingesetzt werden, damit eine möglichst gleichmäßige Verteilung der Schlachtnebenprodukte im Behälter und gleichzeitig eine möglichst homogene Kühlung erfolgen kann.

Besonders bevorzugt werden die Verfahrensschritte (1) bis (3) gleichzeitig durchgeführt, so dass die erhaltenen Schlachtnebenprodukte vorzugsweise bereits während des Sammelvorgangs gekühlt und gemischt werden, um diese frisch zu halten und ein Verderben der Produkte zu verhindern.

Zweckmäßigerweise werden die haltbargemachten Schlachtnebenprodukte aus dem oder den Behältern entnommen oder die Behälter werden entleert, um die Schlachtnebenprodukte, gegebenenfalls unter Kühlen und Mischen, zwischen zu lagern oder um die haltbar gemachten Schlachtnebenprodukte abzutransportieren, beispielsweise um diese einer weiteren Aufarbeitung zuzuführen. Das Entnehmen der Schlachtnebenprodukte kann in jeder dem Fachmann bekannten Art und Weise durchgeführt werden. Beispielsweise kann das Entleeren der Behälter durch Förderbänder, Förderschnecken, eine Rutsche oder in anderer Weise erfolgen.

Ein Entleeren des oder der Behälter ermöglicht ein Umladen der Schlachnebenprodukte und damit einen einfachen Transport, um die Weiterverarbeitung zu erleichtern.

Die Gewinnung von Fetten und Proteinen kann sich hieran anschließen und erfolgt in üblicher Weise gemäß Verfahren, die im Stand der Technik bekannt sind. Eine Rückgewinnung findet in Form des Wiedereinfließens in die Wertstoffkette statt.

Gegenstand der Erfindung ist auch eine Vorrichtung zur Durchführung des erfindungsgemäßen Verfahrens, wobei die Vorrichtung der Erfindung umfasst:

(1) eine oder mehrere Sammelvorrichtungen für die Schlachtnebenprodukte, bevorzugt von Kleintieren einer einzigen Tiergattung, wobei die Tiergattung ausgewählt ist aus Geflügel oder Hasenartigen, unmittelbar nach dem Schlachten;

(2) Mittel zum Kühlen der Schlachtnebenprodukte;

(3) Mittel zum Durchmischen der Schlachtnebenprodukte;

(4) Mittel zum Entnehmen der haltbar gemachten Schlachtnebenprodukte und gegebenenfalls

(5) eine Vorrichtung zum Aufarbeiten der Schlachtnebenprodukte unter Gewinnen von wertvollen Inhaltsstoffen in Form von Fetten und Proteinen.

Die obigen Ausführungen zum erfindungsgemäßen Verfahren gelten entsprechend für die Vorrichtung der Erfindung.

Die erfindungsgemäße Vorrichtung kann stationär als feststehende Betriebsvorrichtung aufgebaut sein, d.h. diese ist beispielsweise unmittelbar an einen Schlachtbetrieb angeschlossen und so aufgebaut, dass die anfallenden Schlachtnebenprodukte unmittelbar in die erfindungsgemäße Vorrichtung überführt werden. Die Schlachtnebenprodukte können auch zur erfindungsgemäßen Vorrichtung transportiert werden.

Die erfindungsgemäße Vorrichtung kann auch beweglich als eine mobile Einheit aufgebaut sein, beispielsweise auf einem Fahrzeug oder Anhänger eines Fahrzeugs, wie einem LKW. Insbesondere die letzte Variante ist erfindungsgemäß bevorzugt, da hierbei eine viel größere Variabilität hinsichtlich der aufzunehmenden Mengen als auch der weiterzuverarbeitenden Mengen vorliegt. Zum Beispiel können ein oder mehrere LKWs oder LKW-Anhänger mit entsprechenden Vorrichtungen ausgestattet werden, so dass unterschiedliche Kapazitäten unmittelbar zur Verfügung stehen. Ganz besonders bevorzugt können die erfindungsgemäß haltbar gemachten Schlachtnebenprodukte von einem LKW entsprechender Größe, der die erfindungsgemäße Vorrichtung enthält, in einen anderen LKW entsprechender Größe umgeladen werden, der zweckmäßigerweise entsprechend gedämmt sein kann, um eine fortgesetzte Kühlung der Schlachtnebenprodukte zu gewährleisten, und gegebenenfalls ebenfalls über eine entsprechende Kühlung verfügt.

Eine geeignete Auskleidung des Innenraums des LKWs, in dem sich die Schlachtnebenprodukte befinden, beispielsweise mit Dämmelementen ist sinnvoll, aber nicht in jedem Fall erforderlich. Dies hängt vom Dauer des Transports ab. Zum Weitertransport kann ein handelsübliches Fahrzeug, beispielsweise ein LKW, zum Einsatz kommen.

Die gesammelten Schlachtnebenprodukte, die in den erfindungsgemäßen Behältern gekühlt und durchmischt vorliegen, werden demnach bevorzugt entladen und zu einer separaten Vorrichtung transportiert, wo die Schlachtnebenprodukte aufgearbeitet werden können, um Fette und Proteine hieraus zurückzugewinnen.

Die Vorteile der Erfindung sind außerordentlich vielschichtig:

Die vorliegende Erfindung ermöglicht es erstmals, Schlachtnebenprodukte, insbesondere bei der Schlachtung von Kleintieren anfallende Teile, die bislang entsorgt werden mußten, frisch zu halten, zu lagern und wieder aufzuarbeiten, wobei insbesondere durch Stabilisieren der wertvollen Eiweißketten und Fettsäuren durch kontrolliertes Mischen und Kühlen, bevorzugt Schnellabkühlen, eine Bevorratung von schlachttäglich anfallenden Produkten gelingt. Die Schlachtnebenprodukte sind reichhaltige Protein- und Fettträger, so dass das Verfahren wirtschaftlich geführt werden kann, da die gewonnenen Proteine und Fette zu Marktpreisen wieder verkauft werden können.

Das erfindungsgemäße Verfahren bzw. die erfindungsgemäße Vorrichtung schließt sich unmittelbar an das Schlachten an und wird insbesondere in großindustriellem Maßstab eingesetzt, so dass auch einige 1000 kg an Schlachtnebenprodukt/Std. aufgearbeitet werden können. Die wieder aufzuarbeitenden Schlachtabfälle sind erfindungsgemäß nicht begrenzt, es kann jede Art an anfallenden Restprodukten nach dem Schlachten von Schlachttieren eingesetzt werden. Besonders bevorzugt werden erfindungsgemäß Schlachtnebenprodukte von Kleintieren, insbesondere Köpfe, Füße und Darmpakete von Geflügel oder Hasenartigen, behandelt und einer Weiterverwertung zugeführt.

Die Vorrichtung oder das Verfahren der Erfindung sind in einer stationären oder auch mobilen Einheit durchführbar, d.h. entweder ortsfest unmittelbar neben einem Schlachtbetrieb oder montiert auf einer mobilen Einheit, wie einem Fahrzeug, insbesondere LKW oder LKW-Anhänger. Letztere Alternative ist aufgrund der hohen Flexibilität bevorzugt.

Die vorliegende Erfindung wird nachfolgend anhand der beiliegenden Zeichnungen detailliert beschrieben, welche die vorliegende Erfindung nicht beschränken sollen. Es zeigen:

Figur 1        ein schematisches Ablaufdiagramm einer Ausführungsform des erfindungsgemäßen Verfahrens;

Figur 2    in schematischer Darstellung eine perspektivische Seitenan- sicht einer Ausführungsform der erfindungsgemäßen Vorrich- tung;

Figur 3    in schematischer Darstellung eine perspektivische rückwärti- ge Ansicht einer Ausführungsform der erfindungsgemäßen Vorrichtung;

Figur 4    in schematischer Darstellung eine weitere perspektivische Vorderansicht einer Ausführungsform der erfindungsgemä- ßen Vorrichtung;

Figur 5    in schematischer Darstellung eine perspektivische Bodenan- sicht einer Ausführungsform der erfindungsgemäßen Vorrich- tung;

Figur 6    in schematischer Darstellung eine perspektivische Ansicht eines erfindungsgemäß verwendeten Behälters in Form einer drehbaren Trommel;

Figur 7    in schematischer Darstellung eine perspektivische Ansicht eines erfindungsgemäß verwendeten Behälters in Form ei- nes Wannensegments aus zwei Halbwannen;

Figur 8    in schematischer Darstellung eine perspektivische Seitenan- sicht des Halbwannensegments von Figur 7, in den zwei Wellen eingebaut sind;

Figur 9    in schematischer Darstellung eine perspektivische Teilan- sicht einer erfindungsgemäßen Ausführungsform einer Welle mit Mischelementen;

Figur 10a    in schematischer Darstellung eine perspektivische Ansicht von zwei gegenläufig betriebenen Wellen jeweils mit Misch- elementen;

Figur 10b    in schematischer Darstellung eine perspektivische Seitenan- sicht von zwei gegenläufig betriebenen Wellen jeweils mit Mischelementen;

Figur 11    in schematischer Darstellung eine Ausführungsform eines Mischelements;

Figur 12    in schematischer Darstellung eine perspektivische Draufsicht auf das Halbwannensegment von Figur 8;

Figur 13    in schematischer Darstellung eine Draufsicht auf das Halb- wannensegment von Figur 8;

Figur 14    in schematischer Darstellung eine perspektivische Ansicht einer Ausführungsform der erfindungsgemäßen Vorrichtung, die in einen LKW-Anhänger eingebaut ist;

Figur 15    in schematischer Darstellung eine perspektivische Ansicht einer weiteren Ausführungsform der erfindungsgemäßen Vorrichtung, eingebaut in einen LKW-Anhänger; und

Figur 16    in schematischer Darstellung eine Explosionsansicht einer Ausführungsform der erfindungsgemäßen Vorrichtung, ein- gebaut in einen LKW-Anhänger.

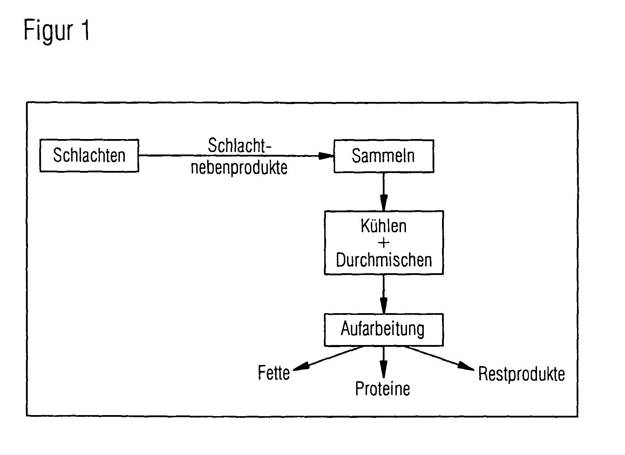

Die Figur 1 zeigt ein schematisches Ablaufdiagramm einer Ausführungsform des erfindungsgemäßen Verfahrens. Hierbei werden nach dem Schlachten übrig gebliebene Schlachtnebenprodukte zunächst gesammelt. Dies geschieht vorzugsweise direkt nach dem Schlachten. Besonders bevorzugt werden die Schlachtnebenprodukte, bevor diese der Sammelvorrichtung zugeführt werden, von beim Schlachten verwendetem Prozesswasser und Eigenwasser abgetrennt. Dies kann beispielsweise in einem Separator, wie Filtereinheiten oder Zentrifugatoren geeigneter Größe, erfolgen. Die erhaltenen Schlachtnebenprodukte werden vorzugsweise bereits während des Sammelvorgangs gekühlt und gemischt, um diese frisch zu halten und ein Verderben der Produkte zu verhindern. Die Schlachtnebenprodukte können so auch über einen längeren Zeitraum zwischengelagert werden. Nach Entnehmen der Schlachtnebenprodukte aus der Sammelvorrichtung können die frisch gehaltenen und damit haltbar gemachten Schlachtnebenprodukte der geschlachteten Tiere, bevorzugt nach Kleintier-Schlachtung beispielsweise Innereien, Köpfe, Füße und dergleichen einer Aufarbeitung unterzogen werden, um hieraus Fette und Proteine rückzugewinnen.
Nachfolgend sind in einer Tabelle die Inhaltsstoffe von Fleisch im Einzelnen aufgelistet (Quelle: Hans-Joachim Rose, Küchenbibel - Enzyklopädie der Kulinaristik, Tre Torri Verlag, ISBN 978-3937963419).

**Tabelle**

| | Eiweiß | Fett | Wasser |
|---|---|---|---|
| Hähnchen, Brust | 23,6 g | 00,7 g | 74,6 g |
| Schweinefleisch, Rohschinken | 18,3 g | 04,4 g | 69,5 g |
| Kalbfleisch, mit Fett | 27,9 g | 02,7 g | 67,0 g |
| Pferdefleisch | 29,8 g | 03,5 g | 65,3 g |
| Rindfleisch, Filet | 29,6 g | 03,6 g | 65,7 g |
| Rindfleisch, Hackfleisch | 27,6 g | 12,2 g | 58,4 g |
| Schweinefleisch | 28,7 g | 09,6 g | 60,7 g |
| Pute, Babypute | 22,4 g | 06,8 g | 69,8 g |
| Schweinefleisch, Bauchspeck | 16,0 g | 28,9 g | 54,4 g |
| Rindfleisch, Corned Beef | 23,5 g | 03,4 g | 69,8 g |
| Schweinefleisch, Eisbein | 28,9 g | 10,3 g | 59,7 g |
| Hirschfleisch | 28,1 g | 04,0 g | 66,7 g |
| Ente, komplett | 18,1 g | 17,2 g | 63,7 g |
| Gans, komplett | 23,4 g | 20,8 g | 54,3 g |
| Hähnchen, Keule | 28,2 g | 11,3 g | 59,4 g |
| Kalbfleisch, mager | 27,2 g | 04,8 g | 68,4 g |
| Kalbfleisch, Brust gefüllt | 18,9 g | 12,7 g | 62,9 g |
| Kalbsfleisch, Haxe | 28,0 g | 06,8 g | 64,1 g |
| Kaninchen, komplett | 26,9 g | 08,9 g | 63,3 g |
| Schweinefleisch, Kassler | 16,6 g | 11,4 g | 64,2 g |
| Lamm, mager | 27,0 g | 07,9 g | 64,0 g |
| Lamm, mit Fett | 23,3 g | 19,9 g | 56,0 g |
| Pute, komplett | 27,0 g | 16,2 g | 55,6 g |
| Pute, Brust frisch | 21,0 g | 01,0 g | 73,7 g |
| Pute, Keule gar | 25,3 g | 09,7 g | 63,9 g |
| Pute, Brust gar | 22,1 g | 04,7 g | 68,2 g |
| Rindfleisch, Rumpsteak | 28,9 g | 12,1 g | 57,6 g |
| Schweinefleisch, gekochter Schinken | 18,4 g | 03,9 g | 73,8 g |

Hieraus sind die Mengen an Eiweiß und Fetten zu entnehmen, die in herkömmlichem Fleisch enthalten sind. Erfindungsgemäß werden jedoch Schlachtabfälle bzw. -nebenprodukte verwendet, die ähnlich wie das oben angegebene Fleisch ebenfalls hohe Gehalte an Fetten und Eiweißen haben, die erfindungsgemäß zurückzugewinnen sind.

Eiweiße und Fette können beispielsweise gleichzeitig isoliert und anschließend über den Zwischenschritt einer fetthaltigen und einer proteinhaltigen Phase voneinander getrennt werden.

Die Verwendung von tierischen Proteinen ist sehr vielfältig. So werden tierische Proteine, beispielsweise in Form von Gelatine, im Ernährungs- oder Futtermittelbereich, als Zusatzstoffe in der Pharmaindustrie, beispielsweise als Beschichtung von Tabletten oder Inhaltsstoff von Zäpfchen, als Zusatz von speziellem Papier, z.B. Foto- oder Druckerpapieren, verwendet. Ein weiteres tieriesches Protein, das Casein, wird als Beschichtungsmaterial für Glanzpapier oder Zusatz für Farben oder als Kleber eingesetzt. Proteine finden auch in der Biotechnologie als Nährlösungen für Mikroorganismen Verwendung. Die Verwendung von Proteinen zur Herstellung von Biokunststoffen (zum Beispiel Pflanzentöpfe) in Form von Fasern, Vliesen und Folien befindet sich noch in der Entwicklung, stellt aber ebenfalls ein sehr interessantes Gebiet dar. Die Verwendung von Fetten ist für die Nahrungsmittelindustrie ebenfalls in vielfältiger Weise bekannt.

Hieran zeigt sich, dass die Rückgewinnung von Fetten und Eiweiß von großem Interesse ist.

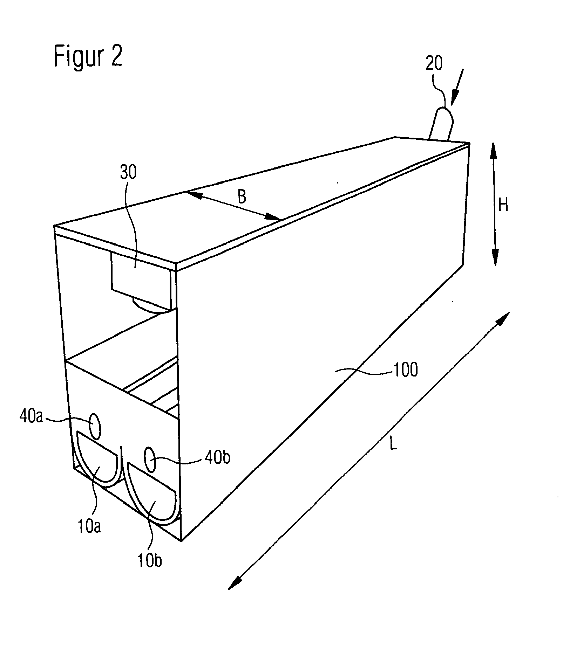

In Figur 2 ist in schematischer Darstellung eine perspektivische Seitenansicht einer Ausführungsform der erfindungsgemäßen Vorrichtung 100 gezeigt. Die erfindungsgemäße Vorrichtung 100 ist aufgebaut aus 2 Behältern 10a und 10b, in die durch eine erfindungsgemäße Zuleitung in Form des Zulaufrohrs 20 Schlachtnebenprodukte (Pfeil in Figur 2) zugeführt und dort gesammelt werden. Die Behälter 10a und 10b liegen im gezeigten Beispielfall in Form von zwei halbrunden längsseitig miteinander verbundenen Halbwannensegmenten vor, die sich über die gesamte Länge L und gesamte Breite B der Vorrichtung 100 erstrecken. Das zur vorzugsweise kontinuierlichen Befüllung der Behälter 10a und 10b vorhandene Zulaufrohr 20 ist zweckmäßigerweise derart ausgewählt, dass es an den jeweiligen Schlachtbetrieb und die dortige Abfallentsorgungseinrichtung hinsichtlich Größe, Abmessungen und Steigungswinkel und dergleichen angepasst ist. Ein üblicher Durchmesser gemäß dem gezeigten Ausführungsbeispiel beträgt etwa 400 bis 500 mm. Übliche Steigungswinkel liegen bei etwa 75°.

Das erfindungsgemäße Verfahren wird zweckmäßigerweise derart geführt, dass die Schlachtnebenprodukte durch das Zulaufrohr 20 direkt in den gekühlten Bereich in die Behälter 10a und 10b fallen.

Die Kühlung kann über ein beliebiges Kühlaggregat 30 erfolgen. Vorzugsweise wird eine Gebläsekühlung eingesetzt, es kann aber auch jede andere Kühlung zum Einsatz kommen. Es versteht sich, dass die erfindungsgemäße Vorrichtung entsprechend isoliert sein kann, um möglichst geringe Energieverluste zu haben. Beispielsweise können bekannte PUR-Dämmelementen als isolierende Einhausung den Kühlbereich, insbesondere die beiden Halbwannen 10a und 10b umgeben (nicht gezeigt).

Zur Wärmeabfuhr kommen beispielsweise herkömmliche halbhermetische Kolbenverdichtergeräte, Kondensatoren und Verdampfer zum Einsatz.

Die Kälteleistungsrechnung steht selbstverständlich in Zusammenhang zur Rohstoffmenge, Prozessdauer und Rohstoffeintrittstemperatur und der gewünschten Endtemperatur. Als Beispiel sei angenommen: Ein Schlachtbetrieb schlachtet von 7.00 Uhr bis 17.00 Uhr. Dann ergibt sich beispielsweise:

$$2000 \text{ kg Rohstoff/pro Stunde} \times 10 \text{ Stunden lang} = 20.000 \text{ kg}$$

| | |
|---|---|
| Rohstoffeintrittstemperatur: | 37°C |
| Gewünschte Endtemperatur: | unter etwa 10°C, bevorzugter um etwa 0°C |

Der Fachmann ist ohne weiteres für jeden Einzelfall dazu in der Lage anhand der vorliegenden Beschreibung sowie der Kenntnisse aus dem Stand der Technik und seines Fachwissens eine entsprechende Kühlung auszuwählen.

Zur Durchmischung der gesammelten Schlachtnebenprodukte ist in den Halbwannen 10a, 10b jeweils über deren gesamte Länge L eine Welle 40a, 40b angebracht. Die Wellen 40a und 40b weisen Mischelemente (nicht gezeigt) auf, die zum kontrollierten Durchmischen, Umwälzen, Verteilen des gesammelten Guts unter entsprechender Luftzufuhr dienen. Diese können in beliebiger Art und Weise ausgeformt und dimensioniert sein, sofern sie den beabsichtigten Zweck erfüllen. Beispielsweise können paddel- oder schaufelartige Mitnehmer an den Wellen 40a, 40b vorgesehen sein. Die Mischelemente können voneinander beanstandet und gegebenenfalls gegeneinander versetzt sein.

Das Mischen kann kontinuierlich und in Intervallen vorgenommen werden. Bevorzugt wird kontinuierlich gemischt. Besonders bevorzugt werden 1 bis 50 U/min der Wellen 40a, 40b, bevorzugt 10 bis 20 U/min, bevorzugter 1 bis 10 U/min, eingestellt. Die eingestellten Umdrehungen können hiervon im Einzelfall aber auch abweichen.

Angetrieben werden können die Wellen 40a, 40b zum Beispiel mittels handelsüblicher Drehstrommotoren, vorteilhafterweise mit angeflanschtem Stirnradgetriebe, beispielsweise geregelt über einen Frequenz-Umrichter.

Insbesondere bei Verwendung von Schlachtnebenprodukten, resultierend aus der Schlachtung von kleinen Tieren, wie Geflügel oder Hasenartigen, gestaltet sich das Mischen besonders einfach, da die erhaltenen Teile besonders klein sind und daher in einfacher Weise eine Durchmischung erfolgen kann.

Sobald die Halbwannen 10a und 10b vollständig befüllt sind, können diese entleert und die Schlachtnebenprodukte abtransportiert werden. Aus den haltbar gemachten Schlachtnebenprodukten können dann die wertvollen Inhaltsstoffe in Form von Fetten und Proteinen gewonnen werden (nicht gezeigt). Dies kann mit einem dem Fachmann im Stand der Technik bekannten Verfahren erfolgen.

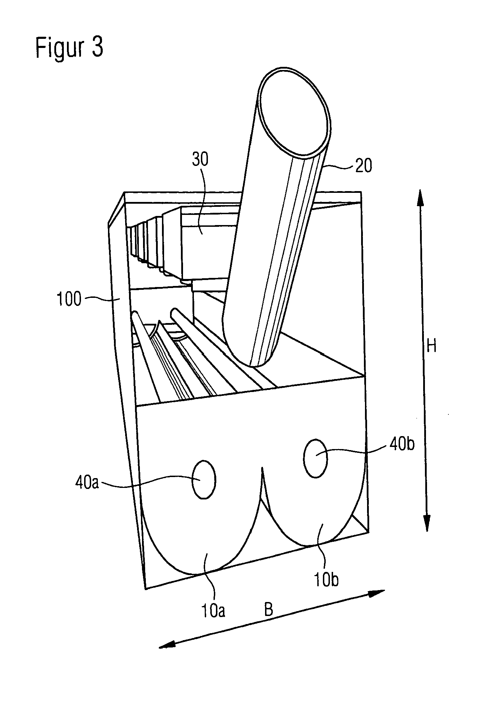

In Figur 3 ist eine schematische Darstellung einer perspektivischen rückwärtigen Ansicht einer Ausführungsform der erfindungsgemäßen Vorrichtung 100 dargestellt. Das Zulaufrohr 20, das vom Schlachtbetrieb kommt, führt die gegebenenfalls von Wasser befreiten Schlachtnebenprodukte direkt in die gekühlten und durchmischten Halbwannen 10a und 10b, wo die Schlachtnebenprodukte, ohne zu verderben, für eine bestimmte Dauer gelagert werden können. Besonders bevorzugt ist das Zulaufrohr 20 und die Halbwannen 10a, 10b aus einem Material aufgebaut, welches kein Anhaften des zu sammelnden Guts erlaubt. Dies ist beispielsweise VA-Stahl oder ein anderes inertes glattes Material. Es kann auch eine Beschichtung auf das Material aufgebracht sein. Die Oberfläche der Halbwannen 10a und 10b, die sich mit den Schlachtnebenprodukten in direktem Kontakt befindet, hat vorzugsweise eine solche glatte Beschaffenheit, das das enthaltene Produkt bei einem einseitigen Anheben der Halbwannen 10a und 10b ohne weiteres abrutscht und entladen werden kann. In jedem Fall muss jedes Material oder jede Beschichtung, die mit den Schlachtnebenprodukten in Kontakt kommt, den Hygienebestimmungen für die Verarbeitung bzw. Weiterverarbeitung von Fleisch und Fleischprodukten entsprechen.

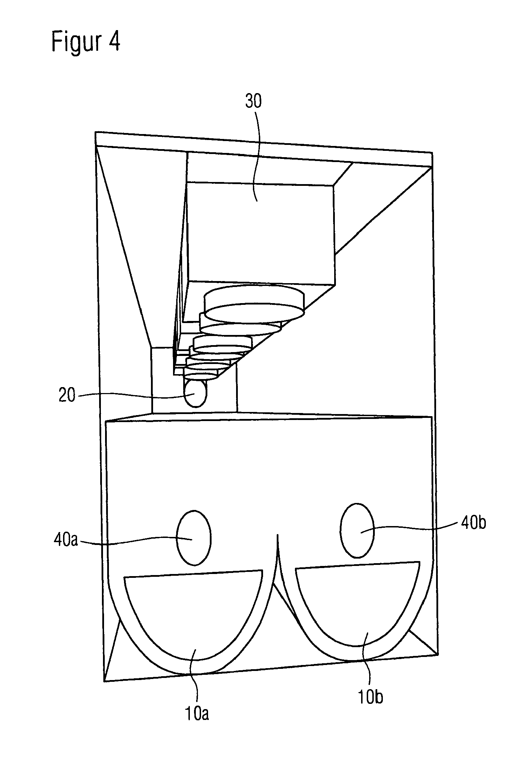

Figur 4 zeigt in schematischer Darstellung die perspektivische Vorderansicht von Figur 3, wobei man im Hintergrund auf den Austritt des Zulaufrohrs 20 sieht.

Es versteht sich von selbst, dass die Vorder- und Rückseiten der gezeigten erfindungsgemäßen Vorrichtung auch völlig anders als beschrieben aufgebaut sein können. Beispielsweise können die vordere und rückwärtige Ausgestaltung auch vertauscht sein.

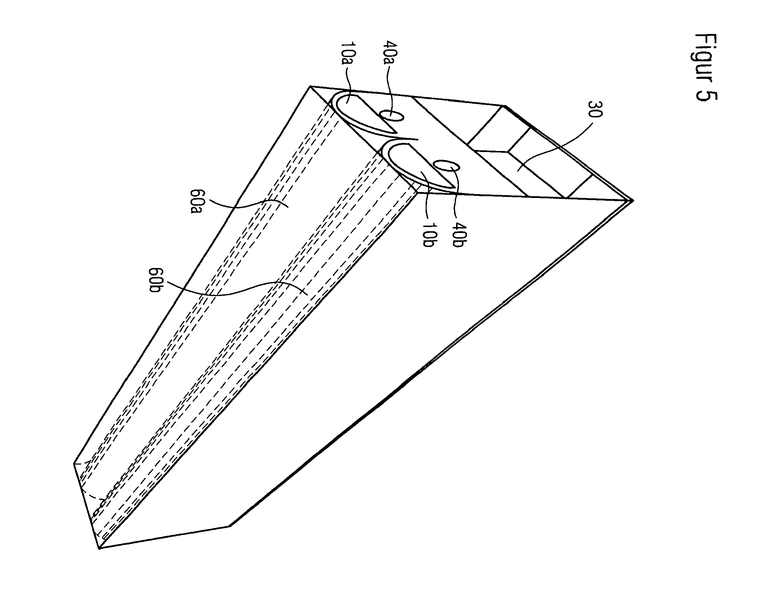

In Figur 5 ist in schematischer Darstellung eine perspektivische Bodenansicht einer Ausführungsform der erfindungsgemäßen Vorrichtung dargestellt. Zur

Entleerung der erfindungsgemäßen Vorrichtung 100 sind beispielsweise im Boden der Halbwannen 10a und 10b Klappen 60a und 60b vorgesehen, welche ein Herausfallen und Abladen der Schlachtnebenprodukte aus den Halbwannen 10a und 10b erlaubt. Die Klappen 60a und 60b sind daher vorzugsweise ein- und ausklinkbar. Diese erfindungsgemäße Ausführungsform erleichtert auch das regelmäßige Reinigen der erfindungsgemäßen Vorrichtung.

Die Entleerung der Wannen 10a und 10b kann aber auch in anderer als der gezeigten Weise erfolgen.

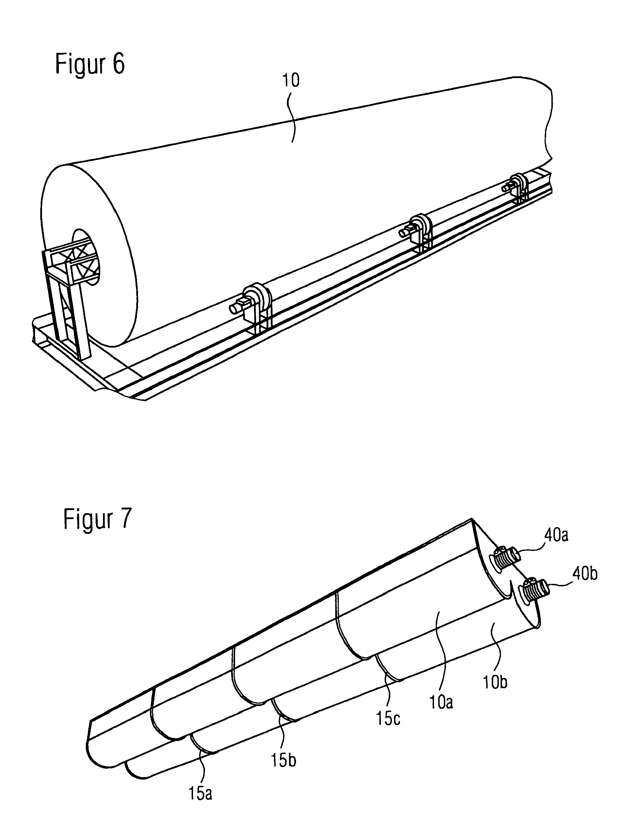

Figur 6 zeigt in schematischer Darstellung eine perspektivische Ansicht eines erfindungsgemäß verwendeten Behälters 10 in Form einer drehbaren Trommel. Die Schlachtnebenprodukte werden hierin gesammelt und gekühlt. Die Kühlung erfolgt in direkter Art und Weise durch Kühlung der Trommel. Die Durchmischung erfolgt durch Drehen der Trommel. Vorzugsweise befinden sich in der Trommel befestigte Mischelemente 41, 42, 43, 44, 45...(nicht gezeigt), welche die Durchmischung des gesammelten Guts unterstützen.

In Figur 7 ist in schematischer Darstellung eine perspektivische Ansicht eines weiteren erfindungsgemäß verwendeten Behälters in Form eines Wannensegments aus zwei Halbwannen 10a, 10b, wie von unten zu sehen, gezeigt. Die Halbwannen 10a, 10b sind an einer Längsseite miteinander so verbunden, dass eine Doppelwanne entsteht. Die beiden Halbwannen 10a, 10b können durch Verstärkungsstreben 15a, 15b, 15c... von außen verstärkt werden. Die Halbwannen 10a, 10b können jeweils einstückig sein oder aus mehreren Bauteilen zusammengesetzt sein. Ferner sind die Wellen 40a und 40b in den Halbwannen 10a, 10b vorgesehen.

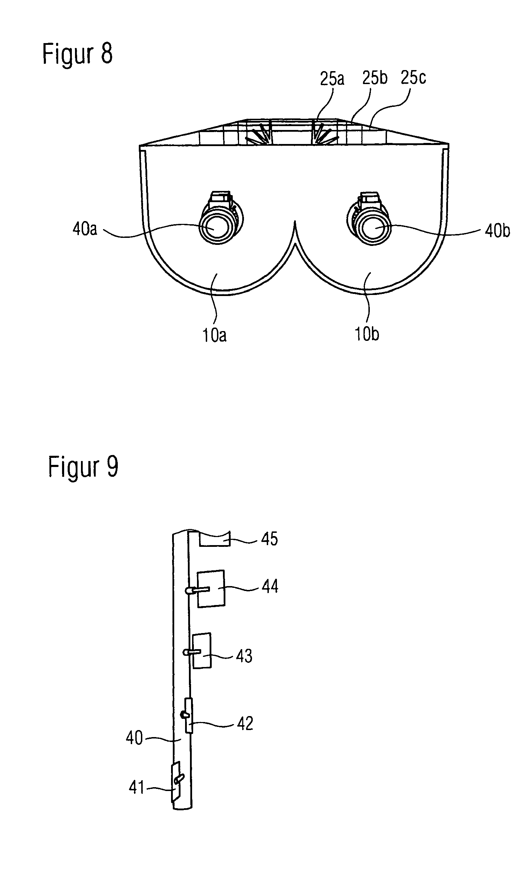

Figur 8 zeigt in schematischer Darstellung eine perspektivische Seitenansicht des Halbwannendoppelsegments 10a, 10b von Figur 7 mit den zwei Wellen 40a und 40b. Zur Stabilisierung der Halbwanne 10a, 10b können Verstärkungselemente vorgesehen sein, wie die Streben 25a, 25b, 25c...., damit die Halbwanne 10a, 10b bei Befüllung mit den Schlachtnebenprodukten ihre Formstabilität behält.

Figur 9 zeigt in schematischer Darstellung eine perspektivische Teilansicht einer erfindungsgemäßen Ausführungsform einer Welle 40 mit Mischelementen 41, 42, 43, 44, 45.... Die Mischelemente 41, 42, 43, 44, 45... können unterschiedliche Form und Größe aufweisen, dies hängt von jedem Einzelfall ab. Die Mischelemente 41, 42, 43, 44, 45..... können voneinander beabstandet und/oder gegeneinander versetzt an der Welle 40 angebracht sein. Die Mischelemente 41, 42, 43, 44, 45..... können auch unterschiedlich groß sein und unterschiedliche Formen aufweisen. Bevorzugt sind die Mischelemente 41, 42, 43, 44, 45....., wie gezeigt, alle von gleicher Form und Größe. Es sind aber auch andere als die gezeigten Formen möglich.

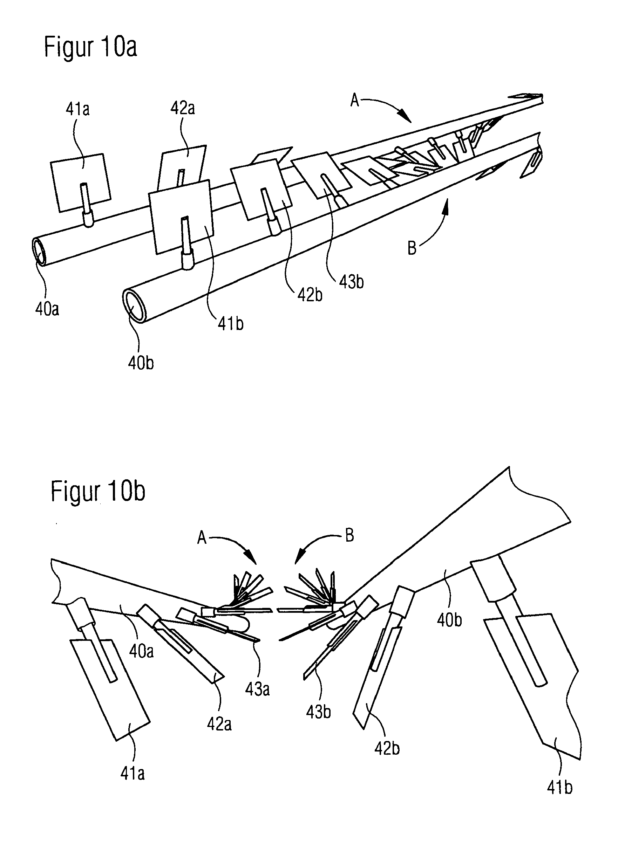

Figuren 10a und 10b zeigen in schematischer Darstellung eine perspektivische Ansicht von zwei gegenläufig betriebenen Wellen 40a, 40b jeweils mit Mischelementen 41a, 42a, 43a... und 41b, 42b, 43b... , wobei die Pfeile A und B die Laufrichtung der Wellen 40a und 40b angeben. Aus den Figuren 10a und 10b ist ersichtlich, dass sich die Mischelemente 41a, 42a, 43a... und 41b, 42b, 43b...nicht gegenseitig blockieren, sondern berührungsfrei aneinander vorbei geführt werden.

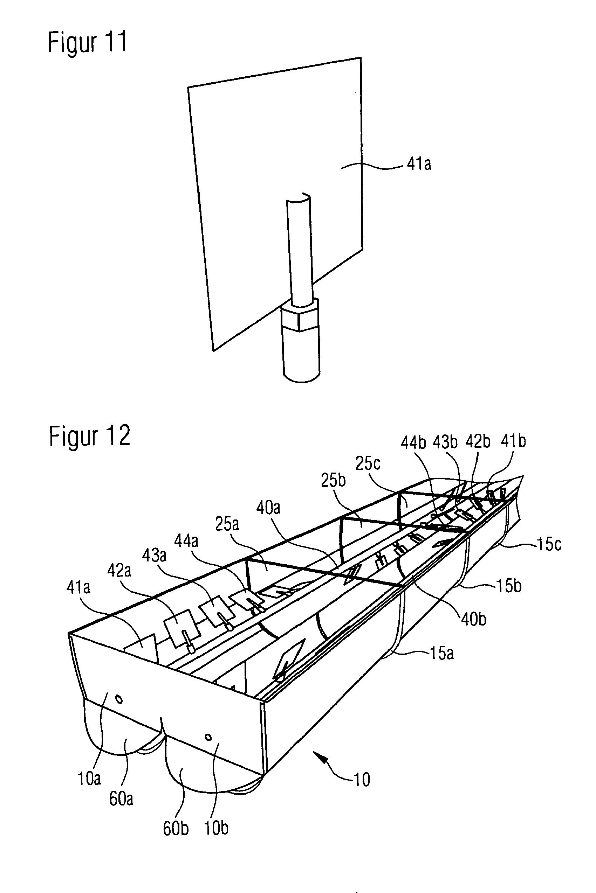

Figur 11 zeigt in schematischer Darstellung eine Ausführungsform eines Mischelements 41a. Das Mischelement kann auch in einer anderen als der gezeigten Form und Dimensionierung ausgebildet werden.

Figur 12 veranschaulicht in schematischer Darstellung eine perspektivische Draufsicht auf das Halbwannendoppelsegment 10a, 10b von Figur 8, wobei die beiden Wellen 40a, 40b gegenläufig betrieben werden. Die Mischelemente 41a, 42a, 43a, 44a... sind an der Welle 40a angeordnet und die Mischelemente 41b, 42b, 43b, 44b... sind an der Welle 40b angeordnet. Die Mischelemente 41a,b, 42a,b, 43a,b, 44a,b... sind so angeordnet, dass die beiden Wellen 40a und 40b sich nicht gegenseitig stören und kein verhacken oder blockieren der Mischelemente auftritt. Im vorliegenden gezeigten Fall sind die Mischelemente 41a, 42a, 43a, 44a...41b, 42b, 43b, 44b...alle von gleicher Größe und in Form von Paddeln gezeigt, die voneinander beabstandet und gegeneinander versetzt sind, um eine möglichst optimal Durchmischung zu erreichen.

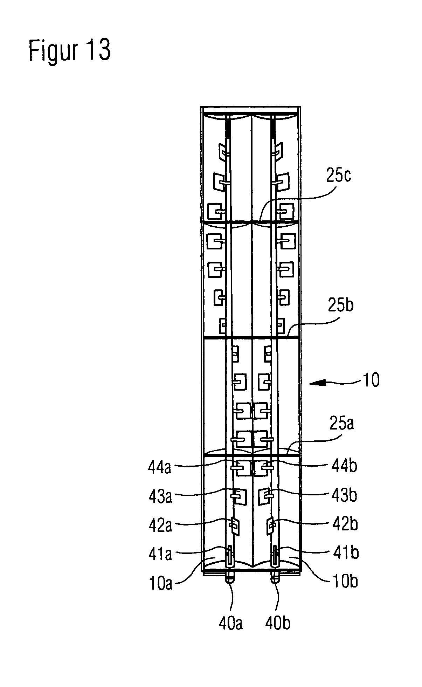

Figur 13 zeigt in schematischer Darstellung eine perspektivische Draufsicht auf das Halbwannensegment 10a, 10b von Figur 12.

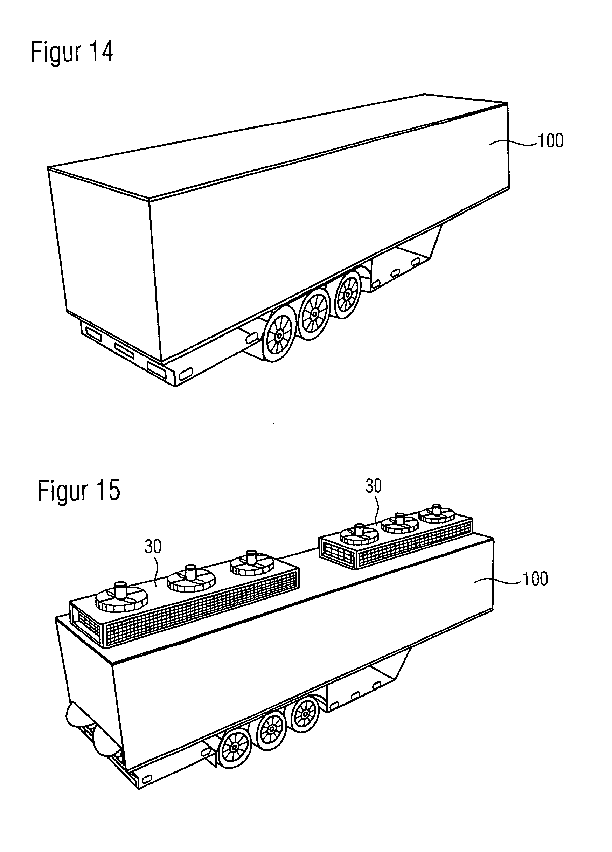

In den Figuren 14 und 15 sind in schematischer Darstellung perspektivische Ansichten von Ausführungsformen der erfindungsgemäßen Vorrichtung 100 gezeigt, die in einen LKW-Anhänger eingebaut sind. Dies ermöglicht die Vorrichtung 100 als mobile Einheit vorzusehen, die größere Flexibilität hinsichtlich der zu lagernden und verarbeitenden Mengen bietet.

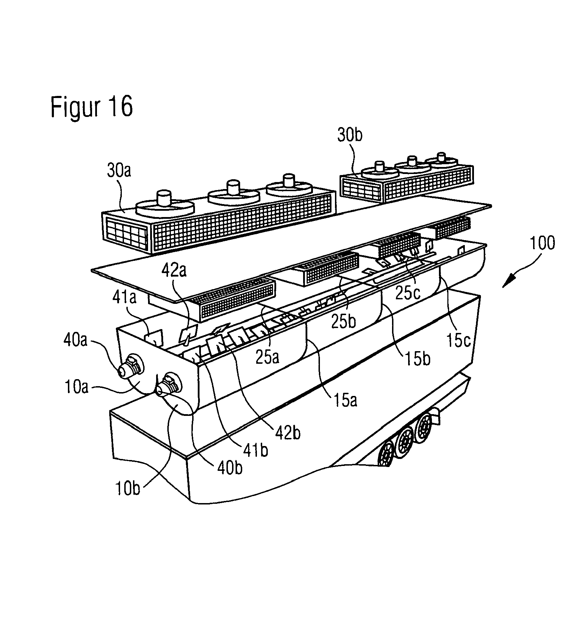

Figur 16 zeigt in einer auseinandergezogenen Darstellung den Aufbau der Vorrichtung 100, umfasst die Halbwannen 10a und 10b mit jeweils einer Welle 40a und 40b, die Mischelemente 41a, 42a... und 41b, 42b... aufweist. Die Wellen 40a und 40b bewegen sich gegenläufig. Oberhalb der Halbwannen 10a und 10b befinden sich Kühlaggregate 30a, 30b zum Kühlen der zu sammelnden Schlachtnebenprodukte. Die Vorrichtung 100 ist in einem fahrbaren Anhänger eingebaut.

Die Figuren 1 bis 16 verdeutlichen nur beispielhaft mögliche Ausgestaltungen. Diese sind nicht beschränkend zu verstehen, sondern stellen lediglich Beispiele möglicher Ausführungsformen dar. Die Figuren 1 bis 16 sind daher nicht abschließend und damit auch nicht beschränkend im Hinblick auf den Schutzbereich des erfindungsgemäßen Verfahrens oder der erfindungsgemäßen Vorrichtung. Andere Möglichkeiten sind je nach Art und Menge der anfallenden Schlachtnebenprodukte denkbar.

**Bezugszeichenliste**

| | |
|---|---|
| 10, | Behälter |
| 10a, 10b | Halbwannendoppelsegmente |
| 15a, 15b, 15c | Verstärkungsstreben |
| 20 | Zulaufrohr |
| 25a, 25b, 25c | Verstärkungsstreben |
| 30, 30a, 30b | Kühlaggregat |
| 40, 40a, 40b | Welle |
| 41, 42, 43, 44, 45 | Mischelemente |
| 41a, 42a, 43a, 44a, 45a | Mischelemente |
| 41b, 42b, 43b, 44b, 45b | Mischelemente |
| 60a, 60b | Klappe |
| 100 | erfindungsgemäße Vorrichtung |

**Patentansprüche**

1. Verfahren zum Frischhalten, Lagern und gegebenenfalls Aufarbeiten von Schlachtnebenprodukten, insbesondere in großindustriellem Maßstab, umfassend die Schritte:

   (1) Sammeln der Schlachtnebenprodukte, bevorzugt von Kleintieren einer Tiergattung, wobei die Tiergattung ausgewählt ist aus Geflügel oder Hasenartigen, unmittelbar nach dem Schlachten in einem oder mehreren Behältern (10, 10a, 10b);
   (2) Kühlen der Schlachtnebenprodukte;
   (3) Durchmischen der Schlachtnebenprodukte und
   (4) Entnehmen der Schlachtnebenprodukte
   unter Beibehaltung der Qualität der vorhandenen Inhaltsstoffe in Form von Fetten und Proteinen,
   sowie gegebenenfalls
   (5) Aufarbeiten der Schlachtnebenprodukte unter Gewinnen von wertvollen Inhaltsstoffen in Form von Fetten und Proteinen.

2. Verfahren nach Anspruch 1,
   **dadurch gekennzeichnet,**
   **dass** als Schlachtnebenprodukte Innereien, Köpfe, Füße, Federn, Knochen und Darmpakete, einschließlich Blut, bevorzugt ausschließlich die Köpfe, Füße, Federn, Knochen und Darmpakete, einschließlich Blut, eingesetzt werden.

3. Verfahren nach Anspruch 1 oder 2,
**dadurch gekennzeichnet,**
**dass** die einzelnen Verfahrensschritte des Sammelns, Kühlens und Durchmischens jeweils kontinuierlich und gleichzeitig durchgeführt werden.

4. Verfahren nach mindestens einem der vorangehenden Ansprüche,
**dadurch gekennzeichnet,**
**dass** dem Sammeln ein Entfernen von Wasser von den Schlachtnebenprodukten vorausgeht.

5. Verfahren nach mindestens einem der vorangehenden Ansprüche,
**dadurch gekennzeichnet,**
**dass** das Sammeln der Schlachtnebenprodukte in einem oder mehreren Behältern (10, 10a, 10b) ausgewählt aus Wannen, Wannensegmenten, Halbwannensegmenten, Boxen, Fässern oder Trommeln durchgeführt wird.

6. Verfahren nach mindestens einem der vorangehenden Ansprüche,
**dadurch gekennzeichnet,**
**dass** das Kühlen so schnell wie möglich durchgeführt wird, insbesondere eine Schnellkühlung durchgeführt wird und auf eine Temperatur im Bereich unter 10°C, bevorzugt unter 8°C, besonders bevorzugt im Bereich auf etwa 0°C (jeweils ± 2°C) gekühlt wird.

7. Verfahren nach mindestens einem der vorangehenden Ansprüche,
**dadurch gekennzeichnet,**
**dass** das Mischen mit mindestens einer Welle (40, 40a, 40b), bevorzugt zwei Wellen (40, 40a, 40b), die bevorzugt gegenläufig betrieben werden, durchgeführt wird, die sich durch oder über die gesamte Länge des oder der Behälter (10a, 10b) erstrecken und Elemente zum Durchmischen (41, 42, 43, 44, 45...) aufweisen.

8. Verfahren nach mindestens einem der vorangehenden Ansprüche,
**dadurch gekennzeichnet,**
**dass** die Elemente zum Durchmischen (41 a,b, 42 a,b, 43 a,b, 44 a,b, 45 a,b ...) gleich groß, voneinander beabstandet und optional zueinander versetzt an der Welle (40, 40a, 40b) angeordnet vorliegen und ausgewählt werden aus Schaufeln, Paddeln, Blättern, Segmenten oder Blechen, wie Leitblechen, definierter Form und Größe.

9. Vorrichtung (100) zur Durchführung des Verfahrens nach einem der Ansprüche 1 bis 8, wobei die Vorrichtung umfasst:

(1) eine oder mehrere Sammelvorrichtungen (10, 10a, 10b) für die Schlachtnebenprodukte, bevorzugt von Kleintieren einer Tiergattung, wobei die Tiergattung ausgewählt ist aus Geflügel oder Hasenartigen, unmittelbar nach dem Schlachten;
(2) Mittel zum Kühlen der Schlachtnebenprodukte;
(3) Mittel zum Durchmischen (40, 40a, 40b) der Schlachtnebenprodukte; und
(4) Mittel zum Entleeren des oder der Sammelvorrichtungen (10a, 10b) sowie gegebenenfalls
(5) eine Vorrichtung zum Aufarbeiten der Schlachtnebenprodukte unter Gewinnen von wertvollen Inhaltsstoffen in Form von Fetten und Proteinen.

10. Vorrichtung (100) nach Anspruch 9,
**dadurch gekennzeichnet,**
**dass** der Sammelvorrichtung (10, 10a, 10b) ein Separator, ausgewählt aus einem Filter oder Zentrifugator, zum Entfernen von Wasser vorgeschaltet ist.

11. Vorrichtung (100) nach Anspruch 9 oder 10,
**dadurch gekennzeichnet,**
**dass** die Vorrichtung (100) eine stationär oder mobile Einheit darstellt.

12. Vorrichtung (100) nach mindestens einem der vorangehenden Ansprüche 9 bis 11,
**dadurch gekennzeichnet,**
**dass** die Vorrichtung (100) als mobile Einheit auf einem Fahrzeug, bevorzugt einem LKW oder einem LKW-Anhänger, montiert ist.

**13.** Vorrichtung (100) nach einem der Ansprüche 9 bis 12,
**dadurch gekennzeichnet,**
**dass** die Mittel zum Kühlen eine Gebläsekühlung darstellen.

**14.** Vorrichtung (100) nach mindestens einem der vorangehenden Ansprüche 9 bis 13,
**dadurch gekennzeichnet,**
**dass** die Mittel zum Durchmischen mindestens eine Welle (40, 40a, 40b), bevorzugt zwei Wellen (40, 40a, 40b), die bevorzugt gegenläufig betrieben werden, darstellen, die sich durch oder über die gesamte Länge der Sammelvorrichtungen (10, 10a, 10b) erstrecken und Elemente zum Durchmischen (41 a,b, 42 a,b, 43 a,b, 44 a,b, 45 a,b ...) aufweisen.

**15.** Vorrichtung nach mindestens einem der vorangehenden Ansprüche 9 bis 14,
**dadurch gekennzeichnet,**
**dass** die Elemente zum Durchmischen (41 a,b, 42 a,b, 43 a,b, 44 a,b, 45 a,b ...) gleich groß, voneinander beabstandet und optional zueinander versetzt an der Welle angeordnet sind und ausgewählt sind aus Schaufeln, Paddeln, Blättern, Segmenten, Trommeln oder Blechen, wie Leitblechen, definierter Form und Größe.

# Figur 1

Figur 2

Figur 3

Figur 4

Figur 5

Figur 6

10

Figur 7

40a

40b

10b

10a

15c

15b

15a

## Figur 8

## Figur 9

## Figur 10a

## Figur 10b

## Figur 11

## Figur 12

Figur 13

Figur 14

100

Figur 15

30

30

100

Figur 16

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 9414326 A1
- WO 9414326 A
- DE 3441425 C1
- US 4476686 A
- DE 9407971 U1
- AT 28066 E